# EUROPÄISCHE PATENTSCHRIFT

(11) **EP 4 286 714 B1**
(45) Veröffentlichungstag und Bekanntmachung des Hinweises auf die Patenterteilung: **03.09.2025**
(21) Anmeldenummer: 23176766.6
(22) Anmeldetag: 01.06.2023
(51) Int. Cl.: F16J 15/06, F16J 15/10, F16J 15/12, B21D 39/03, B23P 11/00, B23P 15/00, B29C 45/14

(54) **DICHTUNG UND VERFAHREN ZUM HERSTELLEN EINER DICHTUNG**
SEAL AND METHOD FOR PRODUCING A SEAL
JOINT ET PROCÉDÉ DE FABRICATION D'UN JOINT

(30) Priorität: 02.06.2022 DE 202022103142 U
(43) Veröffentlichungstag der Anmeldung: 06.12.2023
(73) Patentinhaber: REINZ-Dichtungs-GmbH, 89233 Neu-Ulm (DE)
(72) Erfinder: ERTHLE, Steffen, 89160 Dornstadt (DE); WALDVOGEL, Johann, 86381 Krumbach (DE)
(74) Vertreter: Pfenning, Meinig & Partner mbB

(56) Entgegenhaltungen:
- WO-A1-2021/043833
- DE-A1- 3 634 596
- DE-A1- 4 007 161
- DE-T5- 112017 006 602
- DE-U1- 202018 105 005

## Beschreibung

Die vorliegende Erfindung betrifft eine Dichtung und ein Verfahren zur Herstellung einer Dichtung, wobei die Dichtung der zumindest abschnittsweisen Abdichtung eines um einen Innenraum eines Gehäuses zumindest abschnittsweise umlaufenden Spaltes in dem Gehäuse dient. Beispielsweise ist ein solcher Spalt zwischen einem Gehäusekasten und einem Gehäusedeckel vorhanden. Die Erfindung betrifft dabei insbesondere die Abdichtung des Spaltes zwischen einer Ölwanne und dem Zylinderkurbelgehäuse oder einem Steuergehäusedeckel und dem Motor oder einem Batteriegehäuse und dessen Deckel.

Zur Abdichtung des Deckels eines Gehäuses werden üblicherweise Rahmendichtungen verwendet, die zwischen dem Deckel und dem Gehäusekasten um das gesamte Gehäuse umlaufen. Solche Dichtungen sind häufig als Gummi-Metall-Dichtung ausgeführt, die eine metallische Trägerlage als Trägerrahmen mit daran angespritzten elastischen Dichtelementen aufweisen. Beim Zuschnitt derartiger Trägerrahmen von großen Gummimetalldichtungen entsteht fertigungsbedingt enorm viel Stanzabfall. Zur Verringerung des Stanzabfalls werden Träger von Gummimetalldichtungen daher auch in einzelnen Segmenten hergestellt, die oftmals erst nach weiteren Schritten, beispielsweise Waschen und Beschichten der Metallteile, zum Rahmen der Trägerrahmendichtung zusammengesetzt werden. Die einzelnen Segmente können so nahezu abfallfrei gestanzt, leicht für die Weiterverarbeitung transportiert und anschließend zusammengesetzt und typischerweise durch Verstemmen miteinander verbunden werden.

Die DE 20 2018 105 005 U1 offenbart eine Flachdichtung zur Abdichtung eines um einen Innenraum eines Gehäuses umlaufenden Spaltes in dem Gehäuse mit einer um eine Öffnung weitgehend umlaufenden flachen Lage, die eine zur Öffnung weisende Innenkante und eine von der Öffnung weg weisende Außenkante aufweist, dadurch gekennzeichnet, dass die Flachdichtung mehrere Kopplungsstifte zum mechanischen Koppeln der Flachdichtung mit einem Träger aufweist, deren Längsachse im Wesentlichen senkrecht zu einer Haupterstreckungsebene der Flachdichtung verläuft.

Die WO 2021/043833 A1 offenbart eine Dichtungsanordnung, die Folgendes umfasst: ein Dichtelement zur Anordnung zwischen einem ersten Objekt und einem zweiten Objekt, wobei das Dichtelement zwei oder mehrere mittelbar oder unmittelbar miteinander verbindbare oder miteinander verbundene Dichtelementbauteile umfasst, welche jeweils einen Grundkörperteil und einen am Grundkörperteil angeordneten elastischen Dichtkörperteil umfassen, wobei die Grundkörperteile der Dichtelementbauteile einen vorzugsweise formstabilen Grundkörper des Dichtelements bilden, wobei die elastischen Dichtkörperteile der Dichtelementbauteile einen elastischen Dichtkörper zum Bereitstellen einer Dichtfunktion des Dichtelements bilden.

Bei Gummi-Metall-Dichtungen ist es wünschenswert, die metallischen Trägerlagen benachbarter einzelner Segmente bereits im Spritzgusswerkzeug beim Anspritzen der elastomeren Dichtelemente zugleich zu verstemmen und so ein Werkzeug und einen Verarbeitungsschritt einzusparen. Das Verstemmen könnte aber auch in einem separaten Arbeitsschritt vorgenommen werden. Beim Verstemmen benachbarter Segmente treten jedoch in den jeweiligen metallischen Trägerlagen der Segmente starke Verzüge auf. Soweit die Trägerlagen beispielsweise Positionierlöcher aufweisen, um die Gummimetalldichtung für einen oder mehrere Fertigungsschritte positioniergenau in einem Werkzeug oder positioniergenau auf oder in einem Gehäuse zu fixieren, verringern diese Verzüge die Positionsgenauigkeit des jeweiligen Positionierloches in den Trägern. Daher sind sehr hohe Positionstoleranzen vorzusehen. Zum anderen werden in dem Verstemm- oder Spritzgußwerkzeug die einzelnen Segmente mittels Positionierstiften in der richtigen Lage fixiert, die in korrespondierende Positionierlöcher in den metallischen Trägerlagen der einzelnen Segmente eingreifen. Verziehen sich nun die einzelnen Segmente beim Verstemmen, so verklemmen die Positionierlöcher mit den Positionierstiften und die fertige Rahmendichtung ist nur schwer aus dem Verstemmwerkzeug zu lösen.

Diese Verzüge treten insbesondere dadurch auf, dass beim Verstemmen zweier Segmente Material verdrängt wird und so die Maßhaltigkeit des jeweiligen Segments nicht mehr gewährleistet ist.

Die vorliegende Erfindung setzt an dieser Stelle an und möchte eine Dichtung zur Verfügung stellen, bei der durch das Verbinden, insbesondere Verstemmen, benachbarter Segmente kein oder nur ein sehr geringer Verzug oder eine sehr geringe Verschiebung der Segmente auftritt und damit auch im weiteren Montageprozess der Dichtung weder in einem Werkzeug noch in einem Gehäuse ein Verklemmen zwischen Positionierstiften und Positionierlöchern auftritt und die Maßhaltigkeit und somit auch die Funktion der Dichtung weiterhin gewährleistet ist. Weiterhin soll die Verbindungsstelle der erfindungsgemäßen Dichtung eine hohe Haltekraft, ein hohes Widerstandsmoment gegen Knicken und geringe Positionstoleranzen der Positionierlöcher in der metallischen Trägerlage der Gummimetalldichtung aufweisen. Insbesondere soll die Dichtung in einem einfachen Werkzeug, beispielsweise einem Verstemmwerkzeug, vorteilhafterweise unmittelbar gemeinsam mit dem Anspritzen der elastomeren Dichtelemente an die metallischen Trägerlagensegmente in einem Spritzgusswerkzeug, hergestellt werden können. Dies erfordert für die erfindungsgemäße Dichtung, dass auch die Entnahme aus dem Werkzeug einfach möglich ist, ohne dass die Dichtung in dem Werkzeug verklemmt.

Weiterhin stellt sich die vorliegende Erfindung die Aufgabe, ein Herstellungsverfahren für eine wie oben beschriebene Dichtung zur Verfügung zu stellen, das einfach, kostengünstig, stanzverlustarm und insbesondere in herkömmlichen Werkzeugen auf einfache Weise durchführbar ist.

Diese Aufgabe wird durch die Dichtung nach Anspruch 1 sowie das Verfahren nach Anspruch 8 gelöst. Vorteilhafte Weiterbildungen der erfindungsgemäßen Dichtung und des erfindungsgemäßen Herstellungsverfahrens werden in den abhängigen Ansprüchen gegeben.

Die vorliegende Erfindung betrifft folglich eine Dichtung, die der Abdichtung eines um einen Innenraum eines Gehäuses, insbesondere eines Batteriegehäuses, zumindest abschnittsweise umlaufenden Spaltes in dem Gehäuse dient. Diese Dichtung weist eine Dichtlage, vorteilhafterweise eine metallische Dichtlage, auf, die aus mindestens zwei Segmenten besteht. Die Segmente sind in ihrer Längsrichtung und in Längsrichtung der Dichtlage benachbart zueinander angeordnet und an mindestens einer Verbindungsstelle miteinander verbunden. Auf diese Weise ist es möglich, aus einzelnen Segmenten eine Dichtung mit großer Länge, beispielsweise auch eine geschlossen um eine Kastenöffnung umlaufende Rahmendichtung, zur Verfügung zu stellen.

Erfindungsgemäß ist die Verbindungsstelle nun so ausgestaltet, dass die beiden Segmente ineinandergreifende Eingriffselemente aufweisen, die miteinander verbunden sind. Wesentlich ist hier, dass die Segmente einer derartigen Dichtung oftmals für den Transport zu nachfolgenden Produktionsschritten bzw. bei der Herstellung einzeln vorliegen und erst im Laufe des Herstellungsverfahrens miteinander verbunden werden.

Die Segmente weisen weiterhin Positionierlöcher auf, die jeweils in jedem Segment aus Sicht von einem benachbarten Segment in verbundenem Zustand hinter dem Eingriffselement angeordnet sind. Hier und im Folgenden bezeichnet eine Positionierung "hinter einem/dem Eingriffselement" insbesondere den Fall, dass ein Positionierloch aus Sicht von einem benachbarten Segment aus gesehen, also insbesondere von der Kontaktlinie zu einem benachbarten Segment - und dabei insbesondere von der Mitte der Kontaktlinie - aus gesehen, nicht lediglich in der Folge des Eingriffselementes sondern in geometrisch gerader Linie hinter dem Eingriffselement angeordnet ist.

Erfindungsgemäß weist jedes Segment an der Verbindungsstelle weiterhin eine Durchgangsöffnung auf, die aus Sicht von dem benachbarten Segment ebenfalls hinter dem Eingriffselement angeordnet ist. Dabei kann die Durchgangsöffnung vor dem Positionierloch, hinter dem Positionierloch oder auch seitlich zu dem Positionierloch angeordnet sein. Besonders vorteilhaft ist es jedoch, wenn die Durchgangsöffnung vor dem Positionierloch, insbesondere vor dem nächstgelegenen Positionierloch, d. h. zwischen dem Eingriffselement und dem - vorteilhafterweise nächstgelegenen - Positionierloch angeordnet ist.

Werden zwei Segmente an einer Stelle miteinander verbunden, durch Verpressen oder Verstemmen, so fließt das verdrängte Material überwiegend in die Lücken an der Verbindungsstelle. Möchte man dabei den Dichtungsrahmen in Position halten, z.B. durch Verwendung von Positionierlöchern in den Dichtungssegmenten und in diese eingreifende Positionierstifte des Werkzeugs, so sorgt der relativ zu den feststehenden Positionierstiften entstehende Verzug der Segmente dafür, dass die Segmente mit den Positionierstiften in ihren Positionierlöchern verklemmen.

Die vorliegende Erfindung ermöglicht nun in einer Variante, dass durch Eindrücken eines Haltestempels im Prägewerkzeug auf die Trägerlage der benachbarten Segmente an der Stelle der Durchgangsöffnung, insbesondere auf deren Umfangsrand, jedes zweier zu verbindender Segmente zu beiden Seiten der Verbindungsstelle in Position gehalten werden können und so kein Verklemmen der Segmente mit dem Werkzeug auftritt. Dies gilt auch dann, wenn nur eines der benachbarten Segmente in der erfindungsgemäßen Weise ausgestaltet ist.

Allerdings könnten diese Haltestempel ihrerseits für Materialverschiebungen und für noch mehr Verzug sorgen. Daher ist erfindungsgemäß in den Segmenten eine Durchgangsöffnung als Opferloch vorgesehen. Der Haltestempel kann nun auf diese Durchgangsöffnung aufgesetzt werden und beispielsweise den Umfangsrand der Durchgangsöffnung erfassen. Das von dem Haltestempel verdrängte Material kann nun in die Durchgangsöffnung unter dem Haltestempel fließen während zugleich verhindert wird, dass durch das im verstemmten Verbindungsbereich eines Segmentes verdrängte Material am Positionierloch ein Verzug entsteht.

Werden also zwei Segmente an einer Verbindungsstelle miteinander verbunden, insbesondere miteinander verpresst bzw. verstemmt, so ermöglicht die - beispielsweise zwischen der Verbindungsstelle und dem Positionierloch angeordnete - Durchgangsöffnung im Zusammenspiel mit dem Haltestempel, dass beim Verpressen bzw. Verstemmen beide Segmente nahezu verzugsfrei in Position gehalten werden. Durch das Fixieren der Segmente mittels des Haltestempels an einer Durchgangsöffnung wirkt sich ein Verzug der metallischen Trägerlage, der im Bereich der Verbindungsstelle durch das Verstemmen zweier benachbarter Segmente entsteht, weder auf die Maßhaltigkeit und Position des hinter dem Stempel angeordneten Positionierloches noch auf die Maßhaltigkeit der gesamten Dichtung aus. Damit erfolgt kein Verzug der Position des Positionierloches und damit kein Verklemmen eines Positionierstiftes in dem Positionierloch. Die fertige Dichtung kann also leicht aus dem Werkzeug entnommen werden und auch anschließend maßhaltig, z.B. auf dem Rand eines Batteriekastens, montiert werden.

Dadurch, dass die Durchgangsöffnung vom Haltestempel verdrängtes Material aufnehmen kann, ergibt sich also an dem aus Sicht des benachbarten Segments hinter der Durchgangsöffnung liegenden Positionierloches kein nennenswerter Verzug, wodurch die Maßhaltigkeit des Positionierlochs in dem jeweiligen Segment gewährleistet ist. Das Positionierloch in dem jeweiligen Segment kann also dazu dienen, das Segment beim Einlegen in ein Spritzgusswerkzeug gegenüber benachbarten Segmenten und gegenüber anzuspritzendem Elastomer korrekt zu positionieren. Da die Durchgangsöffnung zwischen Verbindungsstelle und Positionierloch beim Aufdrücken und Eindrücken eines Haltestempels verdrängtes Material aufnimmt, bleibt das Positionierloch ohne oder nur mit geringem Verzug an seiner Position, so dass die fertige Dichtung anschließend aus dem Werkzeug leicht gelöst werden kann. Weiterhin ist es dadurch möglich, die Dichtung verklemmfrei auf einem Gehäuse, das ebenfalls mit Positionierstiften versehen sein kann, zu positionieren.

Zusammenfassend können also dadurch, dass die Verbindungsstelle mit einer Durchgangsöffnung als Fixierpunkt des jeweiligen Segmentes bei der Herstellung der Dichtung, z.B. mittels eines Haltestempels, und als Opferloch für die Aufnahme von Material, das von dem Haltestempel verdrängt wird, ausgestaltet ist, die Verschiebung der Segmente in Folge der Verzüge beim Verstemmen oder Verpressen der Segmente stark reduziert werden und so ein Verklemmen der Lage der Dichtung mit den Positionierstiften in einem Werkzeug, beispielsweise in einem Spritzgusswerkzeug, verhindert werden.

Insgesamt ergibt sich hierdurch eine Dichtung, die sämtliche oben genannten Aufgaben löst. Insbesondere weist eine derartige Verbindung einen geringen Verzug gegenüber dem nicht verbundenen Zustand auf und kann daher ohne weiteres auch in einem Spritzgusswerkzeug hergestellt werden. Die so verbundenen Segmente sind als Gesamtdichtung dennoch leicht aus dem Spritzgusswerkzeug zu entnehmen. Weiterhin werden die Positionen der einzelnen Öffnungen, beispielsweise der Durchgangsöffnung oder der Positionierlöcher in den Segmenten mit hoher Genauigkeit gewährleistet, so dass auch eine Montage in einem Gehäuse ohne Schwierigkeiten erfolgen kann. Zuletzt sind die Verbindungen zwischen einzelnen benachbarten Segmenten sehr stabil und weisen eine hohe Haltekraft und auch eine hohe Knickkraft auf.

Da die Löcher, insbesondere die Positionierlöcher mit hoher Positionsgenauigkeit in der Dichtung vorliegen, sind weitere Maßnahmen wie im Stand der Technik, wie beispielsweise das Vorsehen einer Federung der Positionierstifte, nicht erforderlich. Hierdurch werden die erforderlichen Werkzeuge als auch der Herstellungsprozess einfacher und kostengünstiger.

Die Eingriffselemente benachbarter Segmente können vorteilhafterweise aus komplementären Ausbuchtungen oder Einbuchtungen der zwischen benachbarten Segmenten verlaufenden Außenkanten der beiden Segmente ausgestaltet sein. Insbesondere können Einbuchtungen und Ausbuchtungen in der Lagenebene der Dichtung einander hintergreifen, so dass benachbarte Segmente in Längsrichtung der Segmente und der Dichtung formschlüssig zueinander festgelegt sind.

Die Eingriffselemente können insbesondere schwalbenschwanzförmige Verbindungen ausbilden, die eine Gestalt aufweisen können, wie sie beispielsweise von Puzzleteilen bekannt ist.

Die Verpressung der Eingriffselemente benachbarter Segmente an der Verbindungsstelle kann quer zur Längsrichtung der Segmente und der Dichtung benachbart zueinander oder mit einem Versatz in Längsrichtung der Segmente erfolgen. Vorteilhafterweise beträgt dieser Versatz der Flächenschwerpunkte der Verstemmelemente in Längsrichtung benachbarter Stellen der Verstemmung ca. 1 mm oder mehr. Durch einen derartigen Versatz wird zusätzlich der Verzug quer zur Längsrichtung geringer, als wenn die Positionen, an denen die Eingriffselemente verpresst werden, in Querrichtung unmittelbar benachbart zueinander angeordnet sind.

Weiterhin kann vorteilhafterweise die Außenkante, d. h. die Längskante der Segmente beim Verbinden zweier Segmente angeprägt werden. Hierdurch wird verhindert, dass während des Anspritzvorgangs Elastomer auf die Trägerlage gelangt.

Die vorliegende Erfindung betrifft auch ein Verfahren zum Herstellen einer Dichtung, wie sie vorstehend beschrieben ist, bei dem die beiden Segmente im Bereich der Verbindungsstelle miteinander verpresst, insbesondere verstemmt werden.

Dabei werden die Bereiche um eine oder beide der Durchgangsöffnungen von beiden Seiten der Dichtungslage längs des Umfangsrandes der Durchgangsöffnung durch Anprägen fixiert.

Weiterhin können die Segmente in ein Spritzgusswerkzeug eingelegt werden und mittels des Spritzgusswerkzeugs die beiden Segmente miteinander verstemmt werden und an die Randbereiche der Dichtung zumindest abschnittsweise ein Elastomer angespritzt werden.

Dieses Herstellungsverfahren für eine wie oben beschriebene Dichtung ist einfach, kostengünstig, stanzverlustarm und insbesondere in herkömmlichen Werkzeugen auf einfache Weise durchführbar.

Im Folgenden werden Beispiele erfindungsgemäßer Dichtungen gegeben. Dabei werden in sämtlichen Figuren gleiche oder ähnliche Elemente mit gleichen oder ähnlichen Bezugszeichen versehen, so dass eine Wiederholung von deren Beschreibung gegebenenfalls weggelassen wird. Bei den folgenden Beispielen wird eine Vielzahl von optionalen Merkmalen der vorliegenden Erfindung verwirklicht. Es ist jedoch auch möglich, die vorliegende Erfindung nur mit einem, mit mehreren oder mit sämtlichen der optionalen Merkmale der einzelnen Figuren weiter zu bilden. Auch ist es möglich, optionale Merkmale verschiedener Ausführungsbeispiele miteinander zu kombinieren.

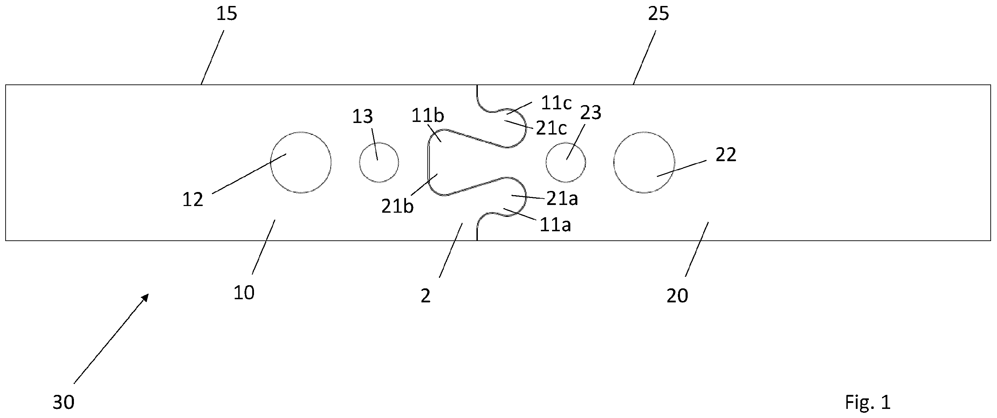

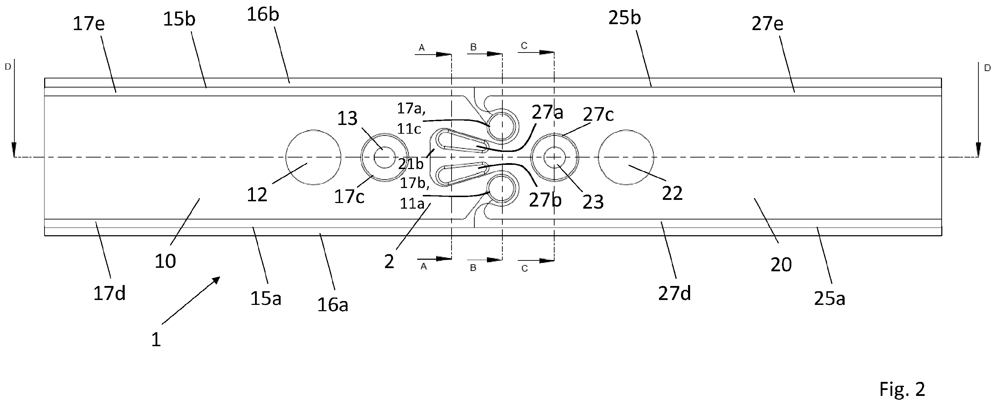

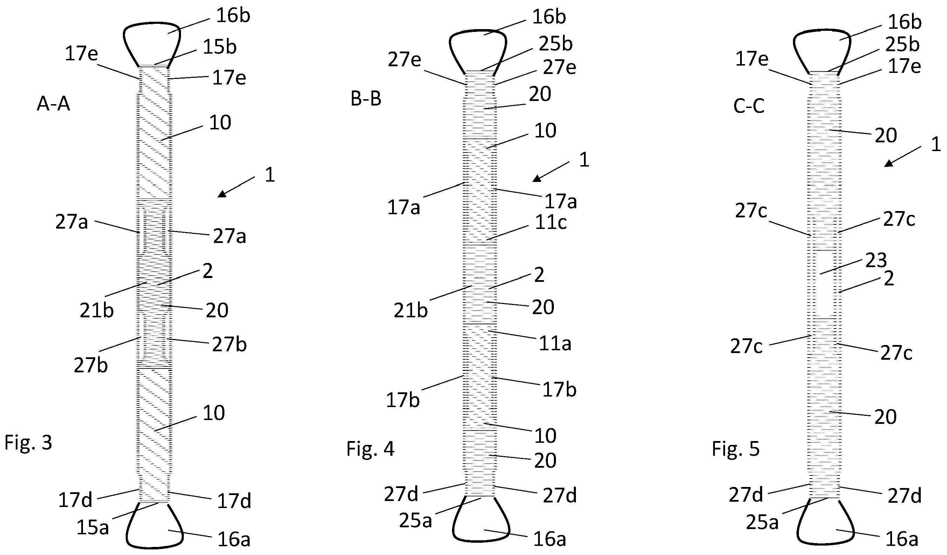

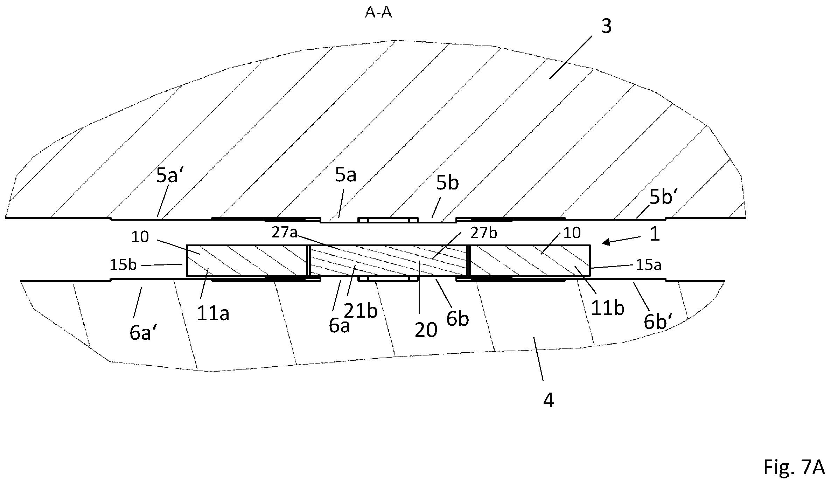

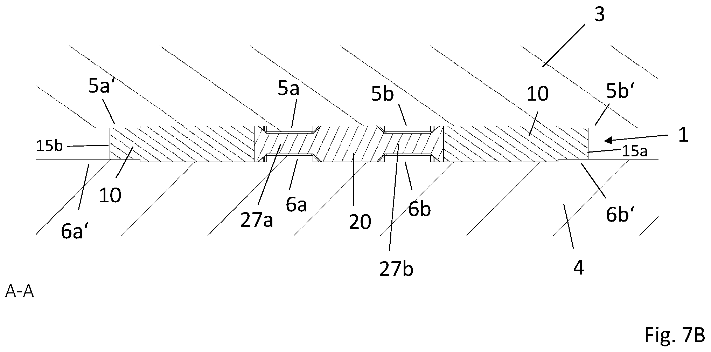

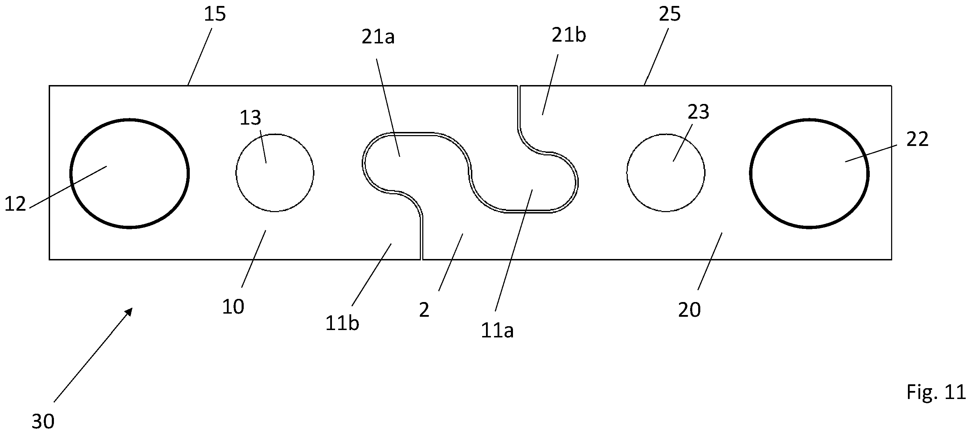

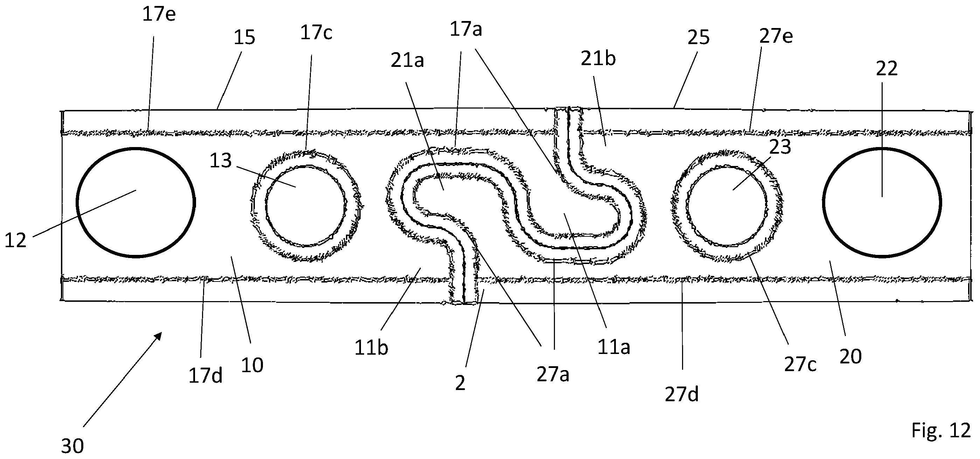

Es zeigen Figur 1 eine Trägerlage einer erfindungsgemäßen Dichtung, Figuren 2 bis 6 eine erfindungsgemäße Dichtung in diversen Ansichten, Fig. 7 bis 10 die erfindungsgemäße Dichtung der Fig. 1 mit Prägewerkzeug in verschiedenen Fertigungsstadien, und Fig. 11 und 12 eine weitere erfindungsgemäße Dichtung.

Figur 1 zeigt eine Trägerlage 30 einer Dichtung 1 gemäß der vorliegenden Erfindung in Aufsicht und im Ausschnitt zweier miteinander verbundener Segmente 10 und 20, die jedoch noch nicht miteinander verstemmt sind. Jedes dieser Segmente besteht im Wesentlichen aus einer metallischen Lage. Die metallischen Lagen der beiden Segmente 10 und 20 sind in einem Verbindungsbereich 2 miteinander verbunden. Das erste Segment 10 weist eine Positionieröffnung 12, eine Durchgangsöffnung 13 und benachbart dazu Eingriffselemente 11a, 11b und 11c auf, die am Umfangsrand 15 des Segmentes 10 und dem Segment 20 benachbart angeordnet sind. Das Segment 20 weist in entsprechender Weise eine Positionieröffnung 22 und eine Durchgangsöffnung 23 und am Umfangsrand 25 des Segmentes 20 und dem Segment 10 benachbart angeordnete Eingriffselemente 21a, 21b und 21c auf, deren Außenkontur jeweils komplementär zur Außenkontur der Eingriffselemente 11a, 11b und 11c ist. Die Eingriffselemente sind in diesem Beispiel entweder als schwalbenschwanzförmige Ausbuchtungen (nämlich Elemente 11a, 11c und 21b) oder als schwalbenschwanzförmige Einbuchtungen (Elemente 11b, 21a, 21c) ausgebildet.

Im durch die Eingriffselemente verbundenen Zustand der Segmente 10 und 20, wie er in Fig. 1 dargestellt ist, greift die Ausbuchtung 11a in die Einbuchtung 21a ein und bildet einen in der Lagenebene der Segmente 10 und 20 liegenden Hinterschnitt zwischen dem Segment 10 und dem Segment 20 aus. Die Ausbuchtung 21b greift in die Einbuchtung 11b ein und bildet dabei einen entsprechenden Hinterschnitt zwischen dem Segment 10 und dem Segment 20 aus. Die Ausbuchtung 11c greift in die Einbuchtung 21c ein und bildet ebenfalls einen entsprechenden Hinterschnitt zwischen dem Segment 10 und dem Segment 20 aus.

Die Durchgangsöffnung 13 ist zwischen dem durch die Eingriffselemente 11a, 11b und 11c gebildeten Ende des Segmentes 10 und der Positionieröffnung 12 angeordnet. Die Durchgangsöffnung 23 ist in hierzu symmetrischer Weise zwischen den Eingriffselementen 21a, 21b und 21c und dem Positionierloch 22 angeordnet.

Während Figur 1 eine Trägerlage 30 im Ausschnitt um eine Verbindungsstelle 2 zwischen zwei Segmenten 10 und 20 im unverstemmten Zustand zeigt, zeigt Figur 2 diese erfindungsgemäße Dichtung 1 im selben Ausschnitt in einem Zustand, in dem die beiden Segmente 10 und 20 im Verbindungsbereich 2 miteinander verstemmt und damit miteinander verbunden sind. Zusätzlich befindet sich nun an der Außenkante der Trägerlage 30 die Elastomeranspritzungen 16a und 16b; die sich über beide Segmente hinwegziehen. Die Verstemmung der beiden Segmente 10 und 20 erfolgt an Verpressungspunkten 17a, 17b, 27a und 27b, die jeweils in den Ausbuchtungen 11c, 11a und 21b angeordnet sind. Die Position dieser Verstemmungspunkte ist dabei so gewählt, dass die beiden Verstemmungspunkte 27a und 27b quer zur Erstreckungsrichtung der Dichtung 1 nebeneinander liegen. Die Verstemmungspunkte 17a und 17b liegen ebenfalls quer zur Erstreckungrichtung der Dichtung 1 nebeneinander, sind jedoch gegenüber den Verstemmungspunkten 27a und 27b in Längsrichtung der Dichtung 1 und auch quer zur Erstreckungsrichtung der Dichtung 1 versetzt. Dieser Versatz bewirkt, dass der durch Verdrängen von Material beim Verstemmen der Punkte 17a, 17b, 27a und 27b auftretende Verzug der Verbindungsstelle 2 möglichst gering gehalten wird. Dennoch wäre der Verzug der Segmente 10 und 20 weiterhin - insbesondere an den Positionierlöchern 12 und 22 - erheblich und würde zu einem Verkanten bzw. Verklemmen der Positionierlöcher führen -, wenn nicht erfindungsgemäß zwischen diesen Verstemmungspunkten 17a, 17b, 27a, 27b einerseits und dem jeweils benachbarten Positionierloch 12, 22 andererseits die Durchgangsöffnung 13 bzw. Durchgangsöffnung 23 angeordnet wäre. An der Durchgangsöffnung 13, d.h. an deren Umfangsrand, wird nun zusätzlich beim Verstemmen der beiden Segmente 10 und 20 in einem Werkzeug das Segment 10 von beiden Seiten mittels Haltestempeln, die von beiden Seiten des Segmentes 10 auf den Umfangsrand der Durchgangsöffnung 13 aufsetzen und diesen fixieren, fixiert, z.B. verpresst. In gleicher Weise kann an der Durchgangsöffnung 23 zusätzlich beim Verstemmen der beiden Segmente 10 und 20 in einem Werkzeug das Segment 20 von beiden Seiten mittels Haltestempeln, die von beiden Seiten des Segmentes 20 auf den Umfangsrand der Durchgangsöffnung 23 aufsetzen und diesen fixieren, fixiert werden. Dadurch, dass die Haltestempel zeitgleich mit den Verstemmstempeln auf die Dichtung drücken müssen, dringen sie tief in die Trägerlage 30 ein. Hierdurch wird jedoch der Umfangsrand der Durchgangsöffnungen 13 und/oder 23 seinerseits verpresst. Es entsteht ein Formschluss, der zusätzlich die Lage in Position hält. Das hier verpresste Material kann jedoch in die jeweilige Durchgangsöffnung 13 bzw.23 fließen. Die Durchgangsöffnungen 13 und 23 dienen also als Aussparungen in den Segmenten 10 und 20 zur Aufnahme von durch Haltestempel verdrängtem Material, d.h. als sog. "Opferlöcher". Die vorliegende Erfindung schlägt also eine Fixierung der Dichtung zwischen Eingriffselementen und Positionierloch und ein Opferloch zur Aufnahme des dabei verdrängten Materials vor.

Die Haltestempel verhindern, dass durch das Verstemmen des Verbindungsbereichs 2 an den Positionierlöchern 12 und 13 ein großer Verzug entsteht. Die Verwendung von Haltestempeln ihrerseits erzeugt an den Positionierlöchern 12 und 22 dabei keinen zusätzlichen bzw. lediglich einen vernachlässigbar kleinen Verzug, da die Haltestempel auf den Umfangsrand der Durchgangsöffnung 13 und 23 aufdrücken, wobei aber die Durchgangsöffnungen 13 und 23 das durch die Haltestempel verdrängte Material im Wesentlichen oder vollständig aufnehmen.

Die Position der Positionierlöcher 12 und 22 wird also durch das Verstemmen der beiden Segmente 10 und 20 an der Verbindungsstelle 2 und durch die Haltestempel an den Durchgangsöffnungen 13 und 23 nicht wesentlich oder gar nicht beeinträchtigt. Die erfindungsgemäße Dichtung 1 ist daher auch im Verbindungsbereich und im Bereich der Positionierlöcher 12 und 22 sehr maßhaltig und verklemmt nicht mit Positionierstiften im Werkzeug oder an einem Gehäuse. Sie kann daher leicht aus dem zum Verbinden benutzten Werkzeug entnommen werden und maßhaltig auch auf ein Gehäuse, beispielsweise ein Gehäuse eines Batteriekastens, aufgebracht werden.

Zusätzlich wird das Segment 10 auch längs seines Außenrandes 15 mit den Randabschnitten 15a, 15b verpresst, so dass sich in der Lage des Segmentes 10 am Außenrand 15 Rücksprünge 17d, 17e bilden. In entsprechender Weise wird das Segment 20 auch längs seines Außenrandes 25 mit den Randabschnitten 25a, 25b verpresst, so dass sich in der Lage des Segmentes 20 am Außenrand 25 Rücksprünge 27d und 27e bilden. An diesen Rücksprüngen sind elastomere Dichtlippen 16a, 16b angespritzt.

Die Prägekonturen, die beim Verstemmen benachbarter Dichtungssegmente, sei es im Bereich der Verbindungsstelle, im Bereich des Opferloches oder längs der Außenkante der Segmente, sind leicht zu erkennen, da in diesen Bereichen zum Einen die Dicke der metallischen Lage des jeweiligen Segmentes verringert ist (siehe beispielsweise Rücksprünge 17d, 17e oder Ausnehmungen 17c, 27c) und zum Anderen das Gefüge der metallischen Lage durch den Stemmvorgang verändert wurde.

Figur 3 zeigt einen Querschnitt durch die Dichtung 1 längs der Linie A-A in Figur 2. Dieser Querschnitt erstreckt sich quer durch die in Längsrichtung der Dichtung 1 länglichen Verpressungsbereiche 27a und 27b in der Ausbuchtung 21b, die dem Verbinden der beiden Segmente 10 und 20 dienen.

Figur 4 zeigt einen Querschnitt längs der Linie B-B in Figur 2. Dieser Querschnitt geht durch die Verpressungsbereiche 17a, 17b in den Ausbuchtungen 11a, 11c.

Figur 5 zeigt einen Querschnitt längs der Linie C-C in Figur 2. Dieser Querschnitt geht durch die Durchgangsöffnung 23. Der Rand der Durchgangsöffnung 23 ist hier ebenfalls verpresst, so dass sich Rücksprünge 27c ergeben. Das durch die Verpressung in den Bereichen 27c verdrängte Material kann dabei in die Durchgangsöffnung 23 ausweichen und führt folglich nicht zu einem Verzug an dem Positionierloch 22. Zugleich schützt die Fixierung des Randes der Durchgangsöffnung 23 das Positionierloch 22 vor einem Verzug durch die Verstemmung des Verbindungsbereiches 2.

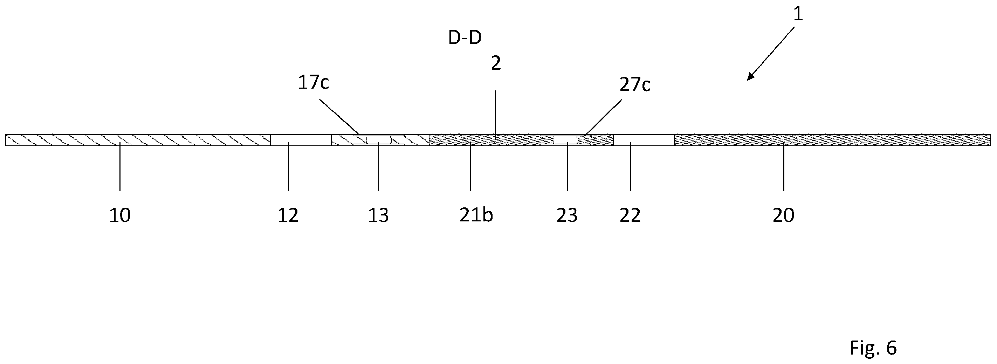

Figur 6 zeigt einen Querschnitt längs der Linie D-D in Figur 2. Dieser Querschnitt erstreckt sich in Längsrichtung durch die Dichtung 1 in mittiger Weise. Im Segment 10 ist die Durchgangsöffnung 13 längs ihres Umfangsrandes in Form einer umlaufenden Ausnehmung 17c verpresst und die Durchgangsöffnung 23 des Segmentes 20 an ihrem Umfangsrand in Form der umlaufenden Ausnehmung 27c verpresst. Das aus den Ausnehmungen 17c bzw. 27c verpresste Material kann in die jeweilige Durchgangsöffnung 13 bzw. 23 fließen. Hierdurch wird vermieden, dass an den Positionierlöchern 12 bzw. 22 ein Verzug entsteht, oder bewirkt, dass ein dort dennoch entstehender Verzug geringfügig und unerheblich ist.

Figuren 7 bis 10 zeigen die Dichtung 1 gemäß Fign. 1 und 2 in den Schnitten A-A, B-B, C-C und D-D jeweils noch nicht miteinander verstemmt mit noch geöffnetem Prägewerkzeug und verstemmt mit geschlossenem Prägewerkzeug.

Fig. 7A zeigt den Schnitt entlang der Linie A-A aus Fig. 2 mit einem Prägewerkzeug bestehend aus einem oberen Prägestempel 3 und einem unteren Prägestempel 4, wobei das Prägewerkzeug noch nicht geschlossen ist und folglich die Segmente 10 und 20 noch nicht miteinander verbunden sind.

Der (in der Figur 7A) obere Prägestempel 3 weist Stempelelemente 5a und 5b auf, mit denen das zweite Segment 20 in Verpressungsbereichen 27a und 27b verpresst werden kann. Auch der (in der Figur 7A) untere Prägestempel 4 weist entsprechende Prägeelemente 6a und 6b auf, die beim Prägevorgang den Prägeelementen 5a und 5b jeweils gegenüberliegend angeordnet sind, so dass zwischen den Elementen 5a und 6a sowie den Elementen 5b und 6b die Verpressungsbereiche 27a bzw. 27b verpresst werden können. Durch das Verpressen der Verpressungsbereiche 27a und 27b, wie es mit geschlossenem Prägewerkzeug in Fig. 7B dargestellt ist, wird das zweite Segment 20 zwischen den benachbarten Bereichen des ersten Segmentes 10 verstemmt.

Weiterhin weist der obere Prägestempel 3 zwei Prägeelemente 5a' und 5b' auf sowie in entsprechender Position der untere Prägestempel 4 die Prägeelemente 6a' und 6b'. Die Prägeelemente 5a' und 6a' verpressen dabei im in Fig. 7B dargestellten geschlossenen Zustand des Prägewerkzeugs den Randbereich des ersten Segmentes 10, um den Außenumfangsrand 15b abzuflachen. In diesem Bereich kann anschließend ein Elastomer in Form einer (hier nicht dargestellten) Elastomerdichtung angespritzt werden.

In entsprechender Weise verpressen die Prägeelemente 5b' und 6b' den gegenüberliegenden Rand 15a des ersten Elementes 10, um ebenfalls eine Verdünnung des ersten Elementes 10 zur Anspritzung einer (hier nicht dargestellten) Elastomerdichtung zu erzeugen.

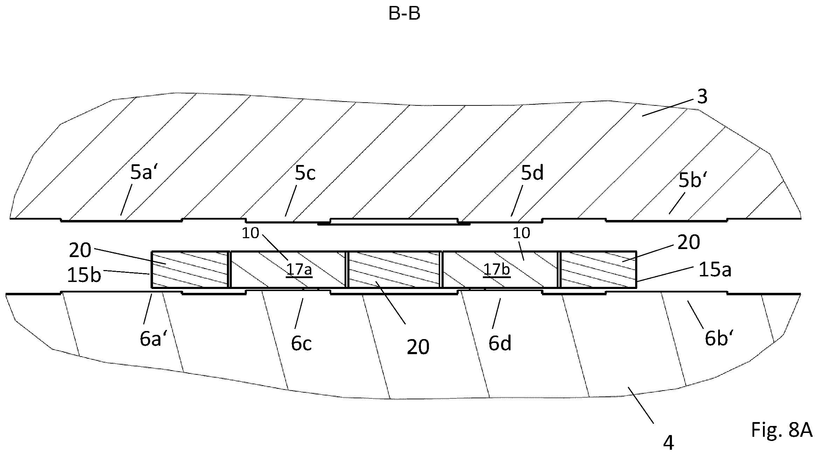

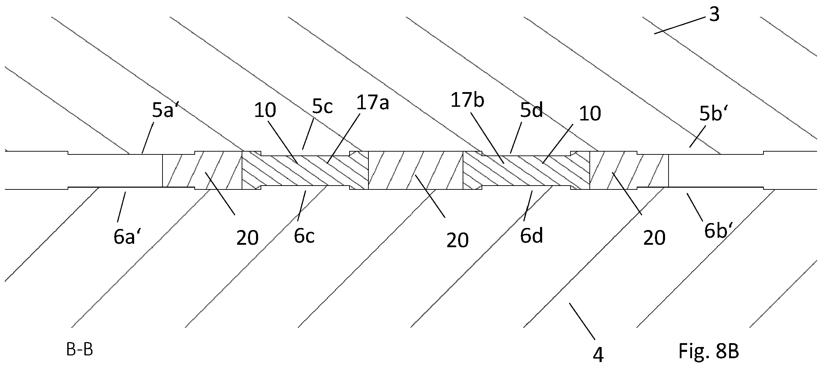

Fig. 8A zeigt den Schnitt B-B aus Fig. 2. In diesem Schnitt weist der obere Prägestempel 3 neben den Prägeelementen 5a'und 5b' Prägeelemente 5c und 5d auf. Der untere Prägestempel 4 weist neben den Prägeelementen 6a'und 6b' Prägeelemente (Stempel) 6c und 6d auf. Mit den Prägeelementen 5c und 6c bzw. 5d und 6d kann das erste Segment 10 in den Verpressungsbereichen 17a, 17b verpresst und so das erste Segment 10 mit dem benachbarten zweiten Segment 20 verstemmt werden, um einen stabilen Form- und Reibschluss zwischen den Segmenten 10 und 20 zu erzeugen. Fig. 8B zeigt denselben Schnitt wie in Fig. 8A, nun jedoch mit geschlossenem Prägewerkzeug mit den Prägestempeln 3 und 4.

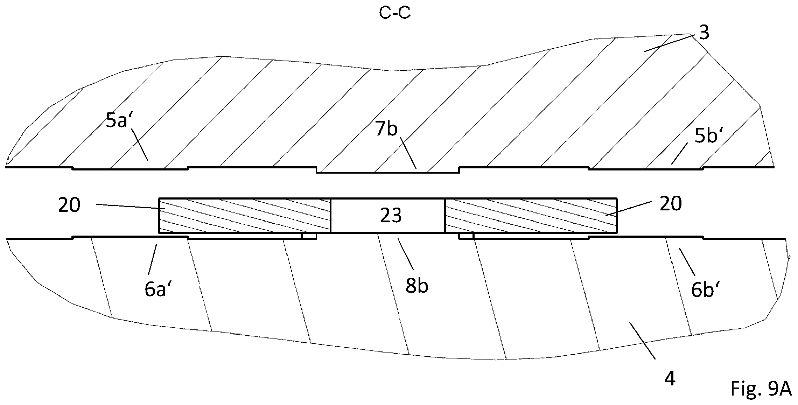

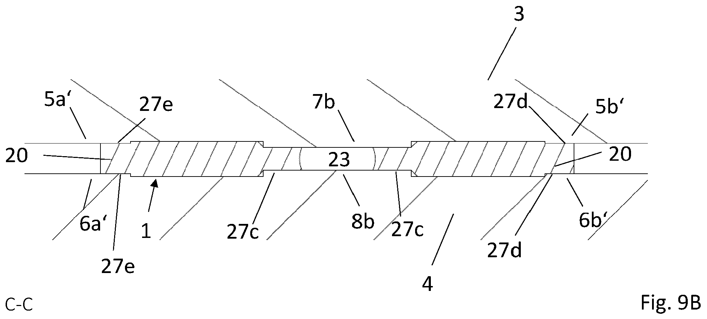

Fig. 9 zeigt einen Schnitt längs der Linie C-C in Fig. 2. Das obere Prägewerkzeug 3 besitzt neben den Stempelelementen 5a', 5b' ein weiteres Stempelelemente 7b, mit dem das zweite Segment 20 im Bereich der Durchgangsöffnung 23 verpresst werden kann. Der Prägestempel 4 weist ebenfalls in diesem Schnitt die Prägeelemente 6a' und 6b' auf sowie ein weiteres Prägeelement 8b, mit dem gemeinsam mit dem zuvor erwähnten Prägeelement 7b des Prägestempels 3 der Umfangsrand der Durchgangsöffnung 23 verpresst werden kann.

Fig. 9A zeigt einen Zustand, bei dem das Prägewerkzeug nicht geschlossen ist, während Fig. 9B einen Zustand zeigt, bei dem das Prägewerkzeug geschlossen ist. Durch das Verpressen des Umfangsrandes der Durchgangsöffnung 23 durch die Prägeelemente 7b und 8b wird das zweite Segment 20 an der Durchgangsöffnung 23 fixiert und verhindert einen Verzug des zweiten Segmentes 20 an dieser Stelle beim Verpressen der Verbindungsstelle 2 in den Bereichen 17a, 17b, 27a und 27b. Das durch die Verpressung des Segmentes 20 durch die Prägeelemente 7b und 8b verdrängte Material kann in die Durchgangsöffnung 23 als Opferloch ausweichen, so dass ein weiterer Verzug des Segments 20 durch diese Verpressung vermieden oder zumindest erheblich verringert werden kann.

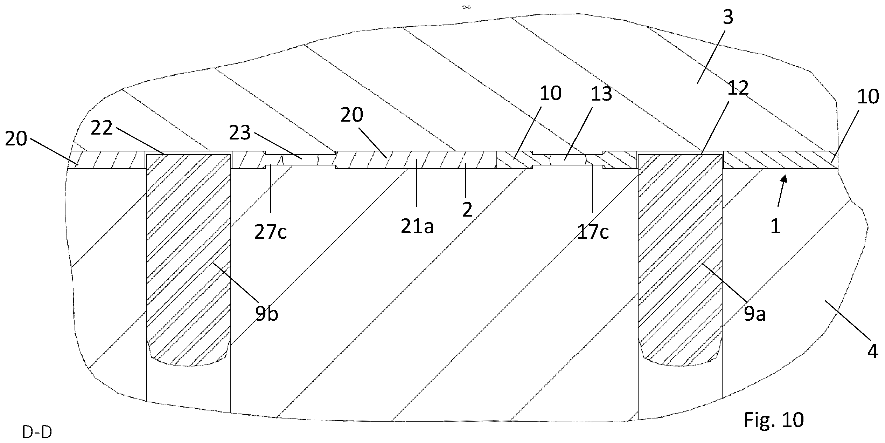

Fig. 10 zeigt einen Schnitt längs der Linie D-D in Fig. 2 bei geschlossenem Prägewerkzeug mit oberem Prägestempel 3 und unterem Prägestempel 4, d.h. in verpreßtem Zustand. In den Positionierlöchern (Passlöcher) 12 und 22 ist jeweils ein Positionierstift 9a bzw. 9b angeordnet, mit dem die Segmente der Dichtung 1 während des Verpressens in Position gehalten werden. Diese Positionierlöcher können auch später zur genauen Positionierung der Dichtung 1 an ihrer vorgesehenen Stelle verwendet werden.

Da zugleich an den Durchgangsöffnungen 13 und 23 sowohl das erste Segment 10 als auch das zweite Segment 20 während des Verpressens des Verbindungsbereiches 2 fixiert werden, wirken sich Verzüge durch das Verprägen des Verbindungsbereiches 2 nicht oder nur geringfügig auf die Bereiche um die Durchgangsöffnungen 13 und 23 und insbesondere auf die aus Sicht des jeweils anderen Segmentes hinter den Durchgangsöffnungen 13 und 23 befindlichen Bereiche der Segmente 10 und 20 aus. Dadurch wird ein Verzug der Positionierlöcher 22 und 12 und ein Verklemmen oder Verkanten der Positionierstifte 9b, 9a in den Positionierlöchern 22 bzw. 12 verhindert.

Im vorliegenden Beispiel sind die Positionierlöcher 12 und 22 aus Sicht des jeweils anderen Segmentes jeweils aus Sicht von der Verbindungsstelle aus hinter, insbesondere in geradliniger Weise hinter den benachbarten Durchgangsöffnungen 13 bzw. 23 angeordnet. Es ist jedoch auch möglich, diese seitlich oder vor den Durchgangsöffnungen 13 bzw. 23 anzuordnen, ohne die beschriebenen technischen Effekte vollständig zu verlieren.

Fig. 11 zeigt die Trägerlage einer Dichtung mit zwei Dichtungssegmenten 10 und 20, die in einem Verbindungsbereich 2 miteinander verbunden sind. Fig. 11 ist eine Darstellung eines weiteren Beispiels, die der Darstellung in Fig. 1 entspricht. Die Dichtungssegmente 10 und 20 sind wie die Dichtungssegmente 10 und 20 in Fig. 1 aufgebaut und unterscheiden sich von diesen lediglich durch die Gestalt der Eingriffselemente. Während die Eingriffselemente 11a, 11b, 21a, 21b, 21c, 11c in Fig. 1 in schwalbenschwanzartiger Form ausgebildet sind, sind die Eingriffselemente 11a und 21a in Fig. 11 derart ausgebildet, dass sie einander seitlich hintergreifen und einen Formschluß in Richtung der Längsachse der Segmente 10 und 20 erzeugen. Dazu sind die Eingriffselemente S-förmig ausgebildet, wobei sich jedes der Eingriffselemente 11a und 21a ausgehend von ihrem jeweiligen Segment an einem Segmentrand längs erstrecken und an ihrem Ende einen Vorsprung in Richtung des anderen Randes aufweisen, so dass die beiden Eingriffselemente 11a und 21a näherungsweise einen S-förmigen Verlauf aufweisen, in die von dem jeweils anderen Eingriffslemente gebildeten Freiräume eingreifen und einander hinterschneiden.

Fig. 12 zweigt dieselbe Trägerlage wie in Fig. 11, allerdings nach dem verstemmen und verprägen der beiden Segmente 10 und 20 im Verbindungsbereich 2 an den Durchgangslöchern 13 und 23 sowie am Außenrand der Segmente 10 und 20. Die verpressten Bereiche, in denen die Lagendicke reduziert ist, sind mit den Bezugszeichen 17a, 17c, 17d, 17e und 27a, 27c, 27d, 27e bezeichnet. Im Unterschied zur Darstellung in Fig. 2 sind die Segmente 10 und 20 im Verbindungsbereich 2 lediglich längs der beiden aneinander liegen Außenkanten der Eingriffselemente 11a, 11b und 21a, 21b miteinander verstemmt.

## Patentansprüche

1. Dichtung (1) zur Abdichtung eines um einen Innenraum eines Gehäuses, insbesondere eines Batteriegehäuses, zumindest abschnittsweise umlaufenden Spaltes in dem Gehäuse mit mindestens einer Dichtlage, wobei die Dichtlage mindestens zwei Segmente (10,20) aufweist, die in Längsrichtung der Dichtlage benachbart zueinander angeordnet sind und an einer Verbindungsstelle (2) miteinander verbunden sind, wobei an der Verbindungsstelle (2) die beiden Segmente (10,20) ineinandergreifende Eingriffselemente (11a, 11b, 11c, 21a, 21b, 21c) aufweisen, die miteinander verbunden sind, wobei die beiden Segmente (10,20) an der Verbindungsstelle (2) miteinander verpresst sind, und **dadurch gekennzeichnet, dass** eines oder beide der Segmente (10,20) an der Verbindungsstelle (2) aus Sicht von dem jeweils anderen Segment hinter dem Eingriffselement ein Positionierloch (12, 22) und eine Durchgangsöffnung (13,23) aufweist, wobei der Umfangsrand der Durchgangsöffnung (13,23) verpresst ist.

2. Dichtung (1) nach dem vorhergehenden Anspruch, **dadurch gekennzeichnet, dass** das Positionierloch (12, 22) aus Sicht von dem benachbarten Segment (10,20) vor oder hinter der Durchgangsöffnung (13, 23) angeordnet ist.

3. Dichtung (1) nach einem der vorhergehenden Ansprüche, **dadurch gekennzeichnet, dass** die beiden Segmente (10,20) an der Verbindungsstelle (2) miteinander verstemmt sind.

4. Dichtung (1) nach einem der vorhergehenden Ansprüche, **dadurch gekennzeichnet, dass** der Rand (15) des einen Eingriffselements (11a) eines Segmentes eine Einbuchtung (11b), gegebenenfalls mit beidseitig benachbarten Ausbuchtungen (11a, 11c), aufweist und dass der Rand (25) des anderen, benachbarten Eingriffselements (11b) eine zur Einbuchtung des Randes (15) des einen Eingriffselementes (11a) komplementäre Ausbuchtung (21b), gegebenenfalls mit zu den Ausbuchtungen (11a, 11c) des einen Eingriffselementes (11a) komplementären Einbuchtungen, aufweist.

5. Dichtung (1) nach einem der vorhergehenden Ansprüche, **dadurch gekennzeichnet, dass** die Eingriffselemente (11a, 11b, 11c) eine schwalbenschwanzförmige Verbindung ausbilden.

6. Dichtung (1) nach einem der vorhergehenden Ansprüche, **dadurch gekennzeichnet, dass** das Segment (10, 20) mit der schwalbenschwanzförmigen Ausbuchtung in einem ersten Verpressungsbereich am Kopfende und/oder an den Flanken der schwalbenschwanzförmigen Ausbuchtung verpresst ist und/oder das Segment mit der schwalbenschwanzförmigen Einbuchtung in zweiten Verpressungsbereichen zu beiden Seiten des Übergangs von der schwalbenschwanzförmigen Ausbuchtung in das zugehörige Segment verpresst ist.

7. Dichtung (1) nach einem der vorhergehenden Ansprüche, **dadurch gekennzeichnet, dass** der Flächenschwerpunkt des ersten Verpressungsbereichs und die Flächenschwerpunkte der zweiten Verpressungsbereiche in Längsrichtung der Dichtung beabstandet zueinander, vorteilhafterweise mindestens 1 mm beabstandet zueinander, angeordnet sind.

8. Verfahren zum Herstellen einer Dichtung (1) nach einem der vorhergehenden Ansprüche,
**dadurch gekennzeichnet, dass**
die beiden Segmente (10,20) im Bereich der Verbindungsstelle (2) miteinander verpresst, insbesondere verstemmt werden, wobei die Bereiche um eine oder beide der Durchgangsöffnungen (13,23) von beiden Seiten der Dichtungslage längs des Umfangsrandes der Durchgangsöffnung durch Anprägen fixiert werden.

9. Verfahren nach dem vorhergehenden Anspruch, **dadurch gekennzeichnet, dass** die Segmente (10,20) in ein Spritzgusswerkzeug eingelegt werden und mittels des Spritzgusswerkzeugs die beiden Segmente (10,20) miteinander verstemmt werden und an die Randbereiche (15, 25) der Dichtung zumindest abschnittsweise ein Elastomer (16) angespritzt wird.

## Claims

1. A gasket (1) for sealing a gap in a housing, in particular a battery housing, which gap extends at least partially around an interior space of the housing, said gasket comprising at least one sealing layer,
wherein the sealing layer comprises at least two segments (10, 20), which are arranged adjacent to each other in the longitudinal direction of the sealing layer and which are connected to each other at a connection point (2),
wherein at the connection point (2) the two segments (10, 20) have interlocking engagement elements (11a, 11b, 11c, 21a, 21b, 21c), which elements are connected to one another such that the two segments (10, 20) are pressed together at the connection point (2), and
**characterized in that**
one or both of the segments (10, 20) has a positioning hole (12, 22) and a through-opening (13, 23) at the connection point (2), behind the engagement element with respect to the other segment, such that the peripheral edge of the through-opening (13, 23) is pressed.

2. The gasket (1) according to the preceding claim, **characterized in that** the positioning hole (12, 22) is arranged in front of or behind the through-opening (13, 23) with respect to the adjacent segment (10, 20).

3. The gasket(1) according to any one of the preceding claims, **characterized in that** the two segments (10, 20) are caulked together at the connection point (2).

4. The gasket (1) according to any one of the preceding claims, **characterized in that** the edge (15) of one engagement element (11a) of one segment has a recess (11b), optionally with protrusions (11a, 11c) adjacent thereto on both sides, and **in that** the edge (25) of the other, adjacent engagement element (11b) has a protrusion (21b) complementary to the recess in the edge (15) of the engagement element (11a), optionally with recesses complementary to the protrusions (11a, 11c) of the engagement element (11a).

5. The gasket (1) according to any one of the preceding claims, **characterized in that** the engagement elements (11a, 11b, 11c) form a dovetail-type joint.

6. The gasket(1) according to any one of the preceding claims, **characterized in that** the segment (10, 20) with the dovetail-shaped bulge is pressed in a first compression region at the head end and/or at the flanks of the dovetail-shaped bulge and/or the segment with the dovetail-shaped bulge is pressed in second compression regions on both sides of the transition from the dovetail-shaped bulge into the associated segment.

7. The gasket (1) according to any one of the preceding claims, **characterized in that** the centre of gravity of the first compression region and the centres of gravity of the second compression regions are arranged at a distance from one another in the longitudinal direction of the gasket, advantageously at a distance of at least 1 mm from one another.

8. A method of manufacturing a gasket (1) according to any one of the preceding claims,
**characterized in that**
the two segments (10, 20) are pressed together, in particular caulked, in the region of the connection point (2), wherein the regions around one or both of the through-openings (13, 23) are fixed from both sides of the sealing layer along the peripheral edge of the through-opening by embossing.

9. The method according to the preceding claim, **characterized in that** the segments (10, 20) are inserted into an injection moulding tool and the two segments (10, 20) are caulked together by means of the injection moulding tool and an elastomer (16) is injected at least in sections onto the edge regions (15, 25) of the seal.

## Revendications

1. Joint d'étanchéité (1) pour étancher une fente dans un boitier s'étendant autour d'un espace intérieur du boitier, en particulier d'un boitier de batterie, au moins par sections, , avec au moins une couche d'étanchéité,
la couche d'étanchéité présentant au moins deux segments (10, 20) qui sont disposés au voisinage l'un de l'autre dans la direction longitudinale de la couche d'étanchéité et qui sont reliés l'un à l'autre dans un point de fixation (2),
les deux segments (10, 20) au point de fixation (2), présentant des éléments d'engagement (11a, 11b, 11c, 21a, 21b, 21c) s'engageant l'un dans l'autre, qui sont reliés entre eux,
**caractérisé en ce que**
les deux segments (10, 20) étant pressés l'un contre l'autre au point de fixation (2), et
l'un ou les deux segments (10, 20) présente(nt) un trou de positionnement (12, 22) et une ouverture de passage (13, 23) au niveau de la fixation (2), vu depuis l'autre segment respectif derrière l'élément d'engagement, le bord périphérique de l'ouverture de passage (13, 23) étant pressé.

2. Joint (1) selon la revendication précédente, **caractérisé en ce que** le trou de positionnement (12, 22) est situé devant ou derrière l'ouverture de passage (13, 23), vu depuis le segment adjacent (10, 20).

3. Joint d'étanchéité (1) selon l'une des revendications précédentes, **caractérisé en ce que** les deux segments (10, 20) sont sertis au niveau de la fixation (2).

4. Joint (1) selon l'une des revendications précédentes, **caractérisé en ce que** le bord (15) de l'un des éléments d'engagement (11a) d'un segment présente un enfoncement (11b), le cas échéant avec des renflements (11a, 11c) voisins des deux côtés, et **en ce que** le bord (25) de l'autre élément d'engagement (11b) voisin présente un renflement (21b) complémentaire du enfoncement du bord (15) de l'un des éléments d'engagement (11a), le cas échéant avec des enfoncements (11b) complémentaires du renflement (11a, 11c) de l'un des éléments d'engagement (11a).

5. Joint d'étanchéité (1) selon l'une des revendications précédentes, **caractérisé en ce que** les éléments d'engagement (11a, 11b, 11c) forment une liaison en queue d'aronde.

6. Joint (1) selon l'une des revendications précédentes, **caractérisé en ce que** le segment (10, 20) avec le renflement en queue d'aronde est pressé dans une première zone de pressage à l'extrémité de tête et/ou sur les flancs du renflement en queue d'aronde et/ou que le segment avec le enfoncement en queue d'aronde est pressé dans des deuxièmes zones de pressage de part et d'autre de la transition entre le renflement en queue d'aronde et le segment correspondant.

7. Joint d'étanchéité (1) selon l'une des revendications précédentes, **caractérisé en ce que** le centre de gravité de la surface de la première zone de compression et les centres de gravité de la surface des deuxièmes zones de compression sont disposés à distance l'un de l'autre dans la direction longitudinale du joint d'étanchéité, avantageusement à une distance d'au moins 1 mm l'un de l'autre.

8. Procédé de fabrication d'un joint d'étanchéité (1) selon l'une des revendications précédentes,
**caractérisé en ce que**
les deux segments (10, 20) sont pressés l'un contre l'autre, en particulier sertis, dans la zone du point de fixation (2), les zones autour de l'une ou des deux ouvertures de passage (13, 23) étant fixées par estampage des deux côtés de la couche d'étanchéité le long du bord périphérique de l'ouverture de passage.

9. Procédé selon la revendication précédente, **caractérisé en ce que** les segments (10, 20) sont placés dans un outil de moulage par injection et, au moyen de l'outil de moulage par injection, les deux segments (10, 20) sont sertis et un élastomère (16) est injecté au moins par sections sur les zones de bord (15, 25) du joint.
